# EUROPEAN PATENT APPLICATION

(11) **EP 4 026 877 A1**
(43) Date of publication of application: **13.07.2022**
(21) Application number: 21150978.1
(22) Date of filing: 11.01.2021
(51) Int. Cl.: C09D 5/00

(54) **AN AQUEOUS COATING COMPOSITION AND A PREPARATION PROCESS THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to an aqueous coating composition and a preparation process thereof, an article and a multilayer coating layer containing the composition, a process for forming a multilayer coating layer, and a process for treating a substrate having a primer coating. The aqueous coating composition, contains: a. at least one aliphatic and/or alicyclic aqueous polyurethane dispersion, the polyurethane contained therein has a melting enthalpy of less than 3 J/g at 20°C to 100°C, based on the first heating-curve measured by DSC according to DIN65467; said aqueous polyurethane dispersion has a tensile strength of 10 MPa - 45 MPa; and b. at least one aqueous polyacrylate dispersion, which has a minimum film formation temperature(MFFT) of less than 60°C and a hydroxyl content of 2.0 wt% - 6.0 wt%, relative to the total weight of said aqueous polyacrylate dispersion; the weight ratio of said aqueous polyurethane dispersion to said aqueous polyacrylate dispersion is 1:4 - 9:10. The aqueous coating composition of the present invention can be used for temporary protection of the substrate, and can be easily and intactly peeled off from the surface of the substrate when not needed.

## Description

### Technical Field

The present invention relates to an aqueous coating composition and a preparation process thereof, an article and a multilayer coating layer containing the composition, a process for forming a multilayer coating layer, and a process for treating a substrate having a primer coating.

### Background technology

Peelable coating layers are widely used for the anti-fouling or temporary protection of the material surface, for example, the temporary protection of the surfaces of the household appliances, the precision instruments, and the workpieces of the plastics industry, the automobile industry and the like. Under the background of increasingly strict environmental protection policies, peelable aqueous compositions free of solvent or co-solvent are increasingly required in the industrial fields of plastics, glass, metals and the like.

CN107779070 discloses an aqueous peelable composition. Said aqueous peelable composition is formulated with a polyurethane dispersion and an acrylic dispersion. A 40-60µm thick composition is coated in five layers onto a material surface. After each coating layer is applied and dried 60°C, the next coating layer is applied. Upon coating the first, second, third and fourth layers with said aqueous peelable composition, the drying time for each layer is 15 minutes, and the drying time after coating the fifth layer is 30 minutes. The extension of the drying time ensures the complete drying of the coating. The method has multiple coating processes.

CN107974156 discloses an environmentally friendly aqueous peelable coating for automobiles and a preparation process and use thereof. The coating is composed of the following components in weight percent: 30-55% of component A: a silicon and fluorine modified aqueous self-crosslinking acrylic emulsion; 20-35% of component B: an aqueous polyurethane dispersion; 10-20% of component C: an aqueous color paste; 3-9% of component D: an auxiliary agent; and the balance of water. The peelable coating contains a co-solvent, which is unfavorable for the environment.

CN108290060 discloses a peelable cosmetic composition and a preparation process thereof, wherein the content of the aqueous polyurethane dispersion is 20 wt% - 50 wt% and the content of the aqueous acrylic dispersion is 1 wt% - 10 wt%. This composition is particularly used as fingernail/toenail polish.

CN109468047 discloses a peelable protective coating comprising the following components: an aliphatic anionic polyester polyurethane dispersion, a photocurable polyurethane acrylic dispersion and a photoinitiator. The coating layer formed from the coating is resistant to strong acids and strong bases, and has good toughness, elasticity and mechanical strength. However, the photocuring technology used in this process is complicated in operation.

In the shoemaking industry, more and more shoe materials are being designed with some customized or personalized designs on the midsole material, such as the ink jet printing operation. This type of midsole material is typically ethylene-vinyl acetate copolymer (EVA), which is adhered to the rubber outsole and the upper material through an adhesive. Before adhering, the EVA needs to be cleaned and coated with a primer, and a UV primer is generally used in the industry to increase the polarity of the EVA surface and help the adhesive to perform better adhering. Because subsequent processes can customize or individualize the part of the midsole material, certain specific parts of the midsole need to be temporarily protected, and the existing method is realized by using adhesive tapes such as masking paper and the like. However, using the adhesive tape for protection has many drawbacks: first, many parts of the shoe material have three-dimensional shapes, the adhesive tape cannot completely fit the shape; secondly, the adhesive tape is not resistant to high temperature, resulting in the ease of adhesive failure in the subsequent baking process, and the loss of the temporary protective effect; finally, the use of the adhesive tape is very time-consuming and laborious, which is not conducive to the assembly line operation of the shoemaking industry.

Accordingly, the shoemaking industry is trying to seek a peelable coating that can be applied to EVA surfaces, particularly EVA surfaces that have been pretreated with a UV primer. However, in the sole forming process, the surface polarity of the common midsole EVA material after being irradiated by the UV primer is increased, so that the adhesive film coated thereon is easy to attach, that is to say, the peelable property of the peelable coating on the EVA material is poor.

It would be desirable to develop a composition that can form a peelable coating layer on a shoe material, particularly an EVA midsole surface to achieve the purpose of temporary protection of the EVA surface, which can be applied by a user with nothing remains but to brush or spray, and which can be removed intactly when the temporary protective coating layer is not needed.

### Summary of the Invention

The purpose of the present invention is to provide an aqueous coating composition and a preparation process thereof, an article and a multilayer coating layer containing the composition, a process for forming a multilayer coating layer, and a process for treating a substrate having a primer coating.

An aqueous coating composition according to the present invention, contains:
a. at least one aliphatic and/or alicyclic aqueous polyurethane dispersion, the polyurethane contained therein has a melting enthalpy of less than 3 J/g at 20°C to 100°C, based on the first heating-curve measured by DSC according to DIN65467; said aqueous polyurethane dispersion has a tensile strength of 10 MPa - 45 MPa; and
b. at least one aqueous polyacrylate dispersion, which has a minimum film formation temperature(MFFT) of less than 60°C and a hydroxyl content of 2.0 wt% - 6.0 wt%, relative to the total weight of said aqueous polyacrylate dispersion;
the weight ratio of said aqueous polyurethane dispersion to said aqueous polyacrylate dispersion is 1:4-9:10.

According to one aspect of the present invention, there is provided a process for preparing the composition provided by the present invention, comprising the following steps: mixing said aqueous polyurethane dispersion and said aqueous polyacrylate dispersion in any manner.

According to another aspect of the present invention, there is provided an article comprising a substrate and a coating layer formed by applying the composition provided according to the present invention to said substrate.

According to another aspect of the present invention, there is provided a multilayer coating layer, comprising a first coating layer and a second coating layer, said second coating layer is located on the first coating layer, said second coating layer is formed by applying the composition provided according to the present invention to said first coating layer, then curing and drying.

According to another aspect of the present invention, there is provided a process for forming a multilayer coating, which comprises the following steps:
i. applying a mixture for forming a first coating layer to a substrate and curing and drying to form the first coating layer; and
ii. applying the composition provided according to the present invention to the surface of the first coating, then curing and drying to form a second coating layer.

According to another aspect of the present invention, there is provided a process for treating a substrate having a primer coating, comprising:
I. applying a primer to a substrate, then curing and drying to form a primer coating;
II. Applying an adhesive to a part of the surface of said primer coating, then curing and drying to form an adhesive layer, and applying the aqueous coating composition provided according to the present invention to the surface of the primer coating where the adhesive is not applied, then curing and drying to form a peelable coating layer; and
III. Contacting the surface containing the adhesive layer with the surface of the substrate itself or an additional base and adhering, optionally removing the peelable coating layer and optionally decorating the surface of the primer coating.

The peelable aqueous coating composition provided by the present invention can form a compact coating layer after drying. The coating layer itself has strong toughness, mechanical strength and heat resistance. When the coating layer does not need to be changed, it can be easily and intactly peeled off from the surface of the substrate.

In case that the aqueous coating composition provided by the present invention is coated on an EVA substrate that has been pretreated with a UV primer, and is manually peeled after a drying process, the peeling performance is good, and the phenomena such as the breakage and the fracture of the coating will not occur during the peeling. The peelable aqueous coating composition of the present invention has a wide range of applications. In addition to EVA materials treated by the irradiation of UV primer, it can also be used for temporary protection of common substrates such as rubber, synthetic leather, TPU (thermoplastic polyurethane) and glass.

The peelable aqueous coating composition provided by the present invention is applied in the shoemaking industry to temporarily protect specific parts of the shoe material to prevent the specific parts from being contaminated by the sizing process, and the coating layer formed from the aqueous coating composition can be peeled off when not needed, and then the protected specific part of the shoe material can be customized and personalized.

### Brief description of the drawings

The present invention will be described and explained in more detail below in conjunction with the accompanying drawings. In the accompanying drawings, the same reference numerals represent the same elements.

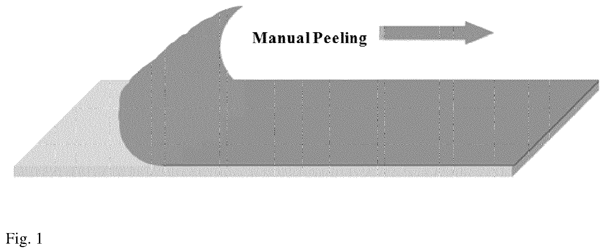

Fig. 1 is a schematic diagram of a method for testing the peelability of the coating layer formed from the aqueous coating composition according to an embodiment of the present invention.

### Detailed description of the invention

The present invention provides an aqueous coating composition, containing: a. at least one aliphatic and/or alicyclic aqueous polyurethane dispersion, the polyurethane contained therein has a melting enthalpy of less than 3 J/g at 20°C to 100°C, based on the first heating-curve measured by DSC according to DIN65467; said aqueous polyurethane dispersion has a tensile strength of 10 MPa - 45 MPa; and b. at least one aqueous polyacrylate dispersion, which has a minimum film formation temperature(MFFT) of less than 60°C, and a hydroxy content of 2.0 wt% - 6.0 wt%, relative to the total weight of said aqueous polyacrylate dispersion; the weight ratio of said aqueous polyurethane dispersion to said aqueous polyacrylate dispersion is 1:4 - 9:10. The present invention also provides a process for preparing the aqueous coating composition, an article and a multilayer coating layer containing the composition, a process for forming the multilayer coating layer, and a process for treating a substrate having a primer coating.

The term "coating" as used herein refers to a substance that can be coated on the surface of an object with a variety of application techniques to form a continuous solid coating layer having firm adhesion and certain strength.

The term "cure" as used herein refers to a process of a liquid substance from a liquid state to a solidification state.

The term "drying" as used herein refers to the process of removing volatile components.

The term "aqueous polyurethane dispersion" as used herein refers to aqueous polyurethane urea dispersion and/or aqueous polyurethane polyurea dispersion and/or aqueous polyurea dispersion and/or aqueous polythiourethane dispersion.

The term "polyurethane" as used herein refers to polyurethane urea and/or polyurethane polyurea and/or polyurea and/or polythiourethane.

The term "aliphatic and/or alicyclic aqueous polyurethane dispersion" as used herein refers to one or more of an aliphatic aqueous polyurethane dispersion and an alicyclic aqueous polyurethane dispersion, the aliphatic aqueous polyurethane dispersion is obtained from the reaction of a system containing an aliphatic polyisocyanate, the alicyclic aqueous polyurethane dispersion is obtained from the reaction of a system containing an alicyclic polyisocyanate.

The term "isocyanate group-reactive" as used herein refers to a group containing a Zerevitinov-active hydrogen, and the Zerevitinov-active hydrogen is defined with reference to Rompp's Chemical Dictionary (Rommp Chemie Lexikon), 10th ed., Georg Thieme Verlag Stuttgart, 1996. Generally, the group containing a Zerevitinov-active hydrogen is understood in the art to refer to hydroxyl group (OH), amino groups (NHₓ) and thiol group (SH).

### Aqueous coating composition

The weight ratio of said aqueous polyurethane dispersion to said aqueous polyacrylate dispersion is preferably 1:4 - 4:5, most preferably 1:4 - 2:3.

Said aqueous coating composition is preferably peelable.

### Aqueous polyurethane dispersion

The polyurethane contained in said aqueous polyurethane dispersion has a melting enthalpy of most preferably not less than 0 J/g and less than 3 J/g at 20°C to 100°C, based on the first heating-curve measured by DSC according to DIN65467.

Said aqueous polyurethane dispersion has a tensile strength of preferably 10 MPa - 30 MPa, and the tensile strength is measured by DIN 53504.

Said aqueous polyurethane dispersion has a 100% module of preferably 0.9 MPa - 5.0 MPa, most preferably 0.9 MPa - 2.0 MPa, and the 100% module is measured by DIN 53504.

The amount of said aqueous polyurethane dispersion is preferably 20 wt% - 40 wt%, relative to the total weight of the composition.

The solid content of said aqueous polyurethane dispersion is preferably 30 wt% - 70 wt%, most preferably 40 wt% - 60 wt%, relative to the total weight of said aqueous polyurethane dispersion.

The amount of the residual organic solvent in said aqueous polyurethane dispersion is preferably lower than 1.0 wt%, relative to the total weight of the solid content of the aqueous polyurethane dispersion.

Said aqueous polyurethane dispersion can be directly added to said aqueous coating composition in the form of a dispersion, or can be added to the aqueous coating composition in the form of polyurethane and water and mixed to form a dispersion.

Said aqueous polyurethane dispersion contains a polyurethane and water.

Said aqueous polyurethane dispersion is preferably obtained by the reaction of a system containing a polymer polyol and a polyisocyanate, and said polyisocyanate is preferably one or more of the following: an aliphatic polyisocyanate and an alicyclic polyisocyanate.

### Polyisocyanate

Said polyisocyanate has the functionality of preferably not less than 2, and most preferably 2-4.

Said polyisocyanate is most preferably an aliphatic polyisocyanate.

Said aliphatic polyisocyanate is preferably one or more of the following: 1,6-hexamethylene diisocyanate, 1,5-pentamethylene diisocyanate, 2,2-dimethylpentamethylene diisocyanate, 2,2,4-trimethylhexamethylene diisocyanate, butylene diisocyanate, 1,3-butadiene-1,4-diisocyanate, 2,4,4-trimethyl-1,6-hexamethylene diisocyanate, 1,6,11-undecane triisocyanate, 1,3,6-hexamethylene triisocyanate, 1,8-diisocyanato-4-isocyanatomethyl octane, bis(isocyanatoethyl) carbonate, bis(isocyanatoethyl) ether, lysine methyl ester diisocyanate, lysine triisocyanate, bis(isocyanatomethyl) sulfide, bis(isocyanatoethyl) sulfide, bis(isocyanatopropyl) sulfide, bis(isocyanatohexyl) sulfide, bis(isocyanatomethyl) sulfone, bis(isocyanatomethyl) disulfide, bis(isocyanatoethyl) disulfide, bis(isocyanatopropyl) disulfide, bis(isocyanatomethylthio) methane, bis(isocyanatoethylthio) methane, bis(isocyanatomethylthio) ethane, bis(isocyanatoethylthio) ethane, 1,5-diisocyanato-2-isocyanatomethyl-3-thia-pentane, 1,2,3-tri(isocyanatomethylthio) propane, 1,2,3-tri(isocyanatoethylthio) propane, 3,5-dithia-1,2,6,7-heptane tetraisocyanate, 2,6-diisocyanatomethyl-3,5-dithia-1,7-heptane diisocyanate, 2,5-diisocyanatomethylthiophene, isocyanatoethylthio-2,6-dithia-1,8-octane diisocyanate, thiobis(3-isothiocyanatopropane), thiobis(2-isothiocyanatoethane), dithiobis(2-isothiocyanatoethane) and hexamethylene diisocyanate, most preferably hexamethylene diisocyanate.

Said alicyclic polyisocyanate is preferably one or more of the following: 2,5-bis(isocyanatomethyl)-bicyclo[2.2.1]heptane, 2,6-bis(isocyanatomethyl)-bicyclo[2.2.1]heptane, bis(isocyanatomethyl)cyclohexane, isophorone diisocyanate, 2,5-diisocyanatotetrahydrothiophene, 2,5-diisocyanatomethyltetrahydrothiophene, 3,4-diisocyanatomethyl tetrahydrothiophene, 2,5-diisocyanato-1,4-dithiane, 2,5-diisocyanatomethyl-1,4-dithiane, 4,5-diisocyanato-1,3-dithiolane, 4,5-bis(isocyanatomethyl)-1,3-dithiolane, 4,5-diisocyanatomethyl-2-methyl-1,3-dithiolane, norbornane diisocyanate (NBDI), xylylene diisocyanate (XDI), hydrogenated xylylene diisocyanate (H₆XDI), 1,4-cyclohexyl diisocyanate (H₆PPDI), 1,5-pentamethylene diisocyanate (PDI), meta-tetramethylxylylene diisocyanate (m-TMXDI) and cyclohexane diisothiocyanate, most preferably isophorone diisocyanate.

Said polyisocyanate may also have an isocyanato group and an isothiocyanato group.

Said polyisocyanate may also be a halogen substitute such as a chlorine substitute, a bromine substitute, an alkyl substitute, an alkoxy substitute, a nitro substitute or a silane substitute of the above polyisocyanates, for example, isocyanatopropyltriethoxysilane or isocyanatopropyltrimethoxysilane.

The amount of said polyisocyanate is preferably 5 wt% - 20 wt%, most preferably 5 wt% - 15 wt%, relative to the total weight of the system.

### Polymer polyol

The melting enthalpy of said polymer polyol is preferably less than 3 J/g at 20°C to 100°C, based on the first heating-curve measured by DSC according to DIN65467.

Said polymer polyol is preferably one or more of the following: polyether polyol, amorphous polyester polyol, polycarbonate polyol, polylactone polyol and polyamide polyol, most preferably amorphous polyester polyol.

Said amorphous polyester polyol is preferably one or more of the following: lightly branched polyester polyol, lactone-type homopolymer and lactone-type copolymer.

Said lactone-type homopolymer and said lactone-type copolymer is preferably obtained by adding a lactone or a lactone mixture such as butyrolactone, ε-caprolactone and/or methyl-ε-caprolactone to an appropriate di- and/or higher-functional starter molecule (for example the above-mentioned low molecular weight polyol as the chain extending component of the polyester polyol). Said ε-caprolactone is preferably a polymer of ε-caprolactone.

Said polyether polyol is preferably one or more of the following: the polyaddition products of styrene oxide, ethylene oxide, propylene oxide, tetrahydrofuran, epoxy butane, and epichlorohydrin and mixed addition and graft products thereof, the condensation products of polyols or mixtures thereof and the alkoxylation products of polyols, amines and amino alcohols.

Said polyether polyol is most preferably one or more of the following: a homopolymer of propylene oxide and ethylene oxide, a mixed polymer of propylene oxide and ethylene oxide and a graft polymer of propylene oxide and ethylene oxide.

The amount of said polymer polyol is preferably 20 wt% - 95 wt%, relative to the total weight of the system.

### Emulsifier

Said system preferably further contains an emulsifier, and the amount of said emulsifier is preferably 0.1 wt% - 20 wt%, relative to the total weight of the system.

Said emulsifier preferably contains at least one isocyanate-reactive group and at least one emulsifying group or potentially emulsifying group.

Said emulsifying group or potentially emulsifying group is preferably one or more of the following: sulfonic group, carboxylic group, tertiary amino group and hydrophilic polyether, most preferably sulfonic group and carboxylic group.

Said emulsifier is preferably one or more of the following: a diamino compound containing a sulfonic group and/or a carboxylic group and a dihydroxy compound containing a sulfonic group and/or a carboxylic group, further preferably one or more of the following: sodium, potassium, lithium, tertiary amine salts of N-(2-aminoethyl)-2-aminoethanesulfonic acid, of N-(3-aminopropyl)-2-aminoethanesulfonic acid, of N-(3-aminopropyl)-3-aminopropanesulfonic acid, of N-(2-aminoethyl)-3-aminopropanesulfonic acid, of analogous carboxylic acids, of dimethylolpropionic acid or of dimethylolbutyric acid, most preferably one or more of the following: N-(2-aminoethyl)-2-aminoethanesulfonic acid salt and dimethylolpropionic acid.

Said sulfonic group or said carboxylic group can be directly used in their salt forms, for example a sulfonic acid salt or a carboxylic acid salt.

The sulfonic acid group or the carboxylic acid group can also be obtained by partial or complete addition of a neutralizing agent to form a salt during or after the preparation of the polyurethane polymer.

### Organic solvent

Said system can further contain an organic solvent, and said organic solvent is miscible with water but is inert to isocyanate groups.

The amount of said organic solvent is preferably 0.001 wt% - 20 wt%, relative to the total weight of the system.

Said organic solvent is preferably one or more of the following: acetone, 2-butanone, tetrahydrofuran, xylene, toluene, cyclohexane, butyl acetate, acetic acid dioxane, methoxypropyl acetate, N-methylpyrrolidone, N-ethylpyrrolidone, acetonitrile, dipropylene glycol dimethyl ether and a solvent containing an ether or ester unit, most preferably one or more of the following: acetone and 2-butanone.

Said solvent may be added only at the beginning of the preparation, or a part of said solvent may be added during the preparation as needed.

### Reaction diluent

Said system can further contain a reaction diluent.

The amount of said reaction diluent is preferably 0.001 wt% - 20 wt%, relative to the total weight of the system.

Said reaction diluent is preferably one or more of the following: acrylic acid and acrylate.

### Preparation of the aqueous polyurethane dispersion

Said aqueous polyurethane dispersion is preferably obtained from a reaction containing the following steps:
A. Reacting some or all of a polyisocyanate and a polymer polyol to obtain a prepolymer, wherein the reaction is optionally carried out in presence of a water-miscible organic solvent but inert to isocyanate groups, or after the reaction, optionally a water-miscible organic solvent but inert to isocyanate groups is added to dissolve the prepolymer;
B. Reacting said prepolymer, optionally an emulsifier, optionally an reaction diluent, the polyisocyanate that is not added in said step A), and the polymer polyol that is not added in said step A) to obtain said polyurethane; and
C. Introducing water and optionally an emulsifier before, during or after step B) to obtain said aqueous polyurethane dispersion.

All processes known in the prior art can be used to prepare the aqueous polyurethane dispersion of the present invention, for example, emulsifier/shearing force process, acetone process, prepolymer mixing process, melting emulsion process, ketoimine process and solid spontaneous dispersion process or the derivative processes thereof and the like, preferably melting emulsion process or acetone process, most preferably acetone process. These processes are summarized in Methoden der organischen Chemie (Houben-Weyl, Erweitenmgs-und zur4.Auflage, Volume E20, H Bartl and J. Falbe, Stuttgart, New York, Thieme 1987, p. 1671-1682).

The sequence for mixing the components of the system for preparing said aqueous polyurethane dispersion can be in a conventional manner.

Said polyisocyanate and said polymeric polyol can be added in a single batch or added in multiple batches, and can be identical or different to those previously added.

Said acetone process is preferably carried out in the absence of a solvent that is miscible with water but inert to isocyanate groups, but in a condition of being heated to a higher temperature, preferably 50°C-120°C.

In order to accelerate the reaction rate of step A), the catalysts conventionally used in the preparation of prepolymers, for example triethylamine, 1,4-diazabicyclo-[2,2,2]-octane, tin dioctoate or dibutyltin dilaurate, most preferably dibutyltin dilaurate, can be used.

The catalyst can be added to the reactor simultaneously with the components of step A), or can be added later.

The conversion degree of the components in said step A) can be obtained by testing the NCO content in the components. For this purpose, spectral measurements, for example infrared or near-infrared spectrum, and refractive index determination or chemical analysis, for example titration, can be carried out simultaneously on the withdrawn sample.

Said prepolymer may be in a solid state or in a liquid state.

The neutralization degree of the prepolymer may be 50 mol% - 125 mol%, preferably 70 mol% - 100 mol%.

The equivalent ratio of the isocyanate-reactive groups of the compound for chain extension in said step B) to the free isocyanate groups (NCO) of the prepolymer may be 40 mol% - 100 mol%, preferably 50 mol% - 100 mol%.

The components of said step B) can be optionally used individually or in admixture in the form of being diluted with water or being diluted with a solvent, and the addition sequence can be of any sequence. The water or solvent content is preferably 70 wt% - 95 wt%, relative to the total weight of said aqueous polyurethane dispersion.

A strong shear such as an intense agitation can be used in said step C).

The organic solvent present in the aqueous polyurethane dispersion can be removed by distillation. The organic solvent may be removed during or after the formation of the polyurethane.

### Aqueous polyacrylate dispersion

Said aqueous polyacrylate dispersion has a minimum film formation temperature(MFFT) of preferably less than 40°C, most preferably less than 30°C, the minimum film formation temperature(MFFT) is measured by DIN ISO 2115.

Said aqueous polyacrylate dispersion has the hydroxy content of preferably 2.0 wt% - 5.0 wt%, most preferably 2.7 wt% - 4.8 wt%, relative to the total weight of said aqueous polyacrylate dispersion.

The amount of said aqueous polyacrylate dispersion is preferably 60 wt% - 80 wt%, relative to the total weight of the composition.

Said aqueous polyacrylate dispersion is preferably a primary dispersion.

Said aqueous polyacrylate primary dispersion has a glass transition temperature of preferably 50°C - 80°C, most preferably 55°C - 70°C, and the glass transition temperature is measured by DSC (differential scanning calorimetry) according to DIN65467.

The solid content of said aqueous polyacrylate primary dispersion is preferably 35 wt% - 45 wt%, relative to the total weight of said aqueous polyacrylate primary dispersion.

### Additive

Said composition preferably further contains an additive.

Said additive is preferably one or more of the following: co-adhesive, lubricant, emulsifier, light stabilizer, antioxidant, filler, anti-settling agent, defoamer, humectant, flow control agent, antistatic agent, film formation auxiliary, reactive diluent, plasticizer, neutralizer, catalyst, thickener, pigment, dye, tackifier and matting agent.

The selection and the use dosage of the additives are in principle known to those of ordinary skill in the art and can be easily determined.

### Manufactured article

The manufactured article is preferably a shoe material, most preferably a shoe midsole.

Said substrate is preferably one or more of the following: wood, plastic, metal, glass, textile, alloy, fabric, artificial leather, paper, cardboard, EVA, rubber, leather, glass fiber, ethylene vinyl acetate copolymer, polyolefine, thermoplastic polyurethane, polyurethane foam, polymer fibre and graphite fibre, most preferably one or more of the following: EVA, rubber, leather, artificial leather, ethylene vinyl acetate copolymer, polyolefine, thermoplastic polyurethane and polyurethane foam.

Said EVA is preferably of Phylon, standard type, injection type, mould pressing preform or built-in air cushion type.

Said application can be the application of said composition to the entire surface of the substrate or only to one or more parts of the surface of the substrate.

Said application can be brush coating, impregnation, spraying, roller coating, knife coating, flow coating, casting, printing or transfer printing, preferably brush coating or spraying.

Said coating layer can have a temporary protection function to the substrate, and the coating layer can be peeled off when not needed.

### Multilayer coating layer

The first coating layer can be of a monolayer or a multilayer.

Said second coating layer can be of a monolayer or a multilayer.

Preferably, said second coating layer can be selectively peeled when not needed.

The adhesive force between the first coating layer and the substrate is preferably greater than the adhesive force between the second coating layer and the first coating layer.

A third coating layer is preferably comprised between said first coating layer and said second coating layer, and the adhesive force between the first coating layer and the substrate and the adhesive force between said first coating layer and said third coating layer are both greater than the adhesive force between said second coating layer and said third coating layer.

Said drying is preferably one or more of the following: infrared thermal radiation, near infrared thermal radiation, microwave, using a convection furnace under the condition of the elevated temperature and using a spray dryer under the condition of the elevated temperature.

The higher the temperature of the drying, the better, but not above the temperature limit at which the substrate deforms in an uncontrolled manner or suffers other damages.

### Process for forming a multilayer coating layer

i. applying a mixture for forming a first coating layer to a substrate and curing and drying to form the first coating layer; and
ii. applying the composition provided according to the present invention to the surface of the first coating, then curing and drying to form a second coating layer.

Said mixture for forming the first coating layer is preferably a primer, and said first coating layer is preferably a primer coating. Said primer coating is formed by applying the primer to the surface, and then curing and drying. The primer is preferably capable of enhancing the adhesive effect of the subsequently applied adhesive.

Said primer is preferably a UV-type primer, and further preferably contains a carbon-carbon double bond structure, and most preferably is one or more of the following: a polyurethane containing a carbon-carbon double bond structure dissolved in a polar solvent, a polyacrylic acid containing a carbon-carbon double bond structure dissolved in a polar solvent and an acrylic monomer containing a carbon-carbon double bond structure dissolved in a polar solvent.

Said polar solvent is preferably one or more of the following: methyl ethyl ketone, ethyl acetate, methyl cyclohexanone and methyl 2-hydroxyethylacetate.

### Process for treating a substrate having a primer coating

### Step I

Said substrate is preferably EVA.

Said substrate may be pretreated, and the pretreatment may be cleaning, coating, or the like.

Preferably, the substrate in step I is pretreated with a cleaning agent before the primer is applied, and the pretreatment steps are as follows:
Cleaning the surface of the substrate with a cleaning agent;
Exposing the cleaned surface of the substrate to a fuming cupboard until the surface of the substrate is dry; and
Putting the substrate into an oven to preheat until the surface temperature of the substrate is 45°C-55°C.

Said cleaning agent is used to clean the surface of the substrate to remove stains such as oil stains. Said cleaning agent is preferably polar solvents or mixtures thereof, most preferably one or more of the following: ethyl acetate, butyl acetate, methyl ethyl ketone, acetone and cyclohexanone.

The temperature of said oven is preferably 55°C- 65°C, most preferably 60°C, the preheating time is preferably 1-5 minutes, most preferably 3 minutes.

The primer is preferably capable of enhancing the adhesive effect of the subsequently applied adhesive.

Said primer is preferably a UV-type primer, and further preferably contains a carbon-carbon double bond structure, and most preferably is one or more of the following: a polyurethane containing a carbon-carbon double bond structure dissolved in a polar solvent, a polyacrylic acid containing a carbon-carbon double bond structure dissolved in a polar solvent and an acrylic monomer containing a carbon-carbon double bond structure dissolved in a polar solvent.

Said polar solvent is preferably one or more of the following: methyl ethyl ketone, ethyl acetate, methyl cyclohexanone and methyl 2-hydroxyethylacetate.

Preferably, the curing and drying process of step I comprises the following steps:
Putting the substrate applied with the primer in an oven at a temperature of 55°C-65°C for 1-5 minutes; and
Irradiating the substrate under the ultraviolet to obtain the primer layer, the ultraviolet light source is a mercury lamp, and the irradiation energy is 600 mJ/cm² - 1000 mJ/cm².

Said application can be the application of said primer to the entire surface of the substrate or only to one or more parts of the surface of the substrate.

Said application can be brush coating, impregnation, spraying, roller coating, knife coating, flow coating, casting, printing or transfer printing, preferably brush coating or spraying.

### Step II

The adhesive layer and the peelable coating layer in said step II are formed in no sequence; the curing and drying of the adhesive and the coating composition may be carried out simultaneously or separately, and the methods thereof may be identical or different.

The curing and drying of the coating composition is preferably carried out in an oven at a temperature of 55°C-65°C for 1-5 minutes.

The curing and drying of the adhesive are carried out according to the methods commonly used by those skilled in the art.

Said peelable coating layer can be selectively peeled when not needed.

The adhesive force between the primer coating and the substrate is preferably greater than the adhesive force between the peelable coating layer and the primer coating.

The primer coating, the adhesive layer and the peelable coating layer can be each independently of a monolayer or a multilayer.

### Step III

Contacting the surface containing the adhesive layer with the surface of the substrate itself or an additional base and adhering, removing the peelable coating layer and optionally decorating the surface of the primer coating in step III can be carried out simultaneously or separately. When carried out separately, the sequence may be: firstly contacting the surface containing the adhesive layer with the surface of the substrate itself or an additional base and adhering, and then removing the peelable coating layer and optionally decorating the surface of the primer coating; alternatively firstly removing the peelable coating layer and optionally decorating the surface of the primer coating, and then contacting the surface containing the adhesive layer with the surface of the substrate itself or an additional base and adhering.

The decoration is preferably one or more of the following: inkjet, laser and colored drawing.

The contacting is preferably carried out before the temperature of the surface of the substrate is reduced to below the temperature at which the adhesive layer can be adhered.

Said additional base may be any base that requires the adhesion.

Said additional base and said substrate can be identical to or different from each other.

Said additional base is preferably coated and heat treated as said substrate.

### Examples

Unless defined otherwise, all technical and scientific terms used herein have the same meanings as commonly understood by those skilled in the art to which this invention belongs. To the extent that the definitions of terms used in this specification conflict with meanings commonly understood by those skilled in the art to which this invention belongs, the definitions set forth herein prevail.

Unless otherwise indicated, all numbers expressing quantities of ingredients, reaction conditions, and the like used in the specification and claims are to be understood as being modified by the term "about". Accordingly, unless indicated to the contrary, the numerical parameters set forth herein are approximations that can vary depending upon the desired properties to be obtained.

The expression "and/or" as used herein means one or all of the mentioned elements.

The use of "comprise" and "contain" herein encompasses the presence of the mentioned elements alone and the presence of other elements not mentioned in addition to the mentioned elements.

All percentages in the present invention are by weight unless otherwise stated.

The analyses and measurements of the present invention are all carried out at 23°C, unless otherwise stated.

As used in this specification, unless otherwise indicated, "a", "an", and "the" are intended to include "at least one" or "one or more". For example, "a component" refers to one or more components, and thus more than one component may be considered and may be employed or used in the practice of the described embodiments.

The solid content of the dispersion is measured according to DIN-EN ISO 3251 with the HS153 moisture meter available from Mettler Toledo Inc.

### Raw materials and reagents

Impranil DLP: an aliphatic aqueous polyurethane dispersion with a solid content of 50± 1%, wherein the polyurethane has a melting enthalpy of less than 3 J/g, a tensile strength of about 10 MPa and a 100% module of about 0.9 MPa, commercially available from Covestro.

Impranil DL 1069: an aliphatic aqueous polyurethane dispersion with a solid content of 50± 1%, wherein the polyurethane has a melting enthalpy of less than 3 J/g, a tensile strength of about 20 MPa and a 100% module of about 1.6 MPa, commercially available from Covestro.

Impranil DLU: an aliphatic aqueous polyurethane dispersion with a solid content of 60± 1%, wherein the polyurethane has a melting enthalpy of less than 3 J/g, a tensile strength of about 30 MPa and a 100% module of about 2.0 MPa, commercially available from Covestro.

Impranil DLV/1: an aliphatic aqueous polyurethane dispersion with a solid content of 40 ± 1%, wherein the polyurethane has a melting enthalpy of less than 3 J/g, a tensile strength of about 25 MPa and a 100% module of about 1.7 MPa, commercially available from Covestro.

Impranil DLC-F: an aliphatic aqueous polyurethane dispersion with a solid content of 40 ± 1%, wherein the polyurethane has a melting enthalpy of less than 3 J/g, a tensile strength of about 50 MPa and a 100% module of about 6.0 MPa, commercially available from Covestro.

Impranil DLC-T: an aliphatic aqueous polyurethane dispersion with a solid content of 35 ± 1%, wherein the polyurethane has a melting enthalpy of less than 3 J/g, a tensile strength of about 6 MPa and a 100% module of about 5.5 MPa, commercially available from Covestro.

Impranil DAH: an aromatic aqueous polyurethane dispersion with a solid content of 35 ± 1%, wherein the polyurethane has a melting enthalpy of less than 3 J/g, a tensile strength of about 4 MPa and a 100% module of about 1.0 MPa, commercially available from Covestro.

Dispercoll U XP 2643: an aromatic aqueous polyurethane dispersion with a solid content of 40 ± 1%, wherein the polyurethane has a melting enthalpy of less than 3 J/g, a tensile strength of about 1 MPa and a 100% module of about 0.5 MPa, commercially available from Covestro.

Dispercoll U 8755: an anionic aqueous polyurethane dispersion with a solid content of 50 ± 1%, wherein the polyurethane has a melting enthalpy of 40 J/g, a tensile strength of about 58 MPa and a 100% module of about 6.0 MPa, commercially available from Covestro.

Dispercoll U 2682: an anionic aqueous polyurethane dispersion with a solid content of 50 ± 1%, wherein the polyurethane has a melting enthalpy of 47 J/g, a tensile strength of about 18 MPa and a 100% module of about 6.3 MPa, commercially available from Covestro.

Dispercoll U 56: an aliphatic aqueous polyurethane dispersion with a solid content of 50 ± 1%, wherein the polyurethane has a melting enthalpy of 44 J/g, a tensile strength of about 23.2 MPa and a 100% module of about 6.6 MPa, commercially available from Covestro.

Bayhydrol A 242: an aqueous polyacrylate primary dispersion with a MFFT of <0 °C and a hydroxyl content of 4.0%, commercially available from Covestro.

Bayhydrol A 2457: an aqueous polyacrylate primary dispersion with a MFFT of 26°C and a hydroxyl content of 2.7%, commercially available from Covestro.

Bayhydrol A 2546: an aqueous polyacrylate primary dispersion with a MFFT of 18°C and a hydroxyl content of 4.8%, commercially available from Covestro.

Bayhydrol AH 2892: an aqueous polyacrylate primary dispersion with a MFFT of 60°C and a hydroxyl content of 0, commercially available from Covestro.

Bayhydrol A 2846: an aqueous polyacrylate primary dispersion with a MFFT of 64°C and a hydroxyl content of 1.5%, commercially available from Covestro.

MEK: methyl ethyl ketone, commercially available from Yonghua Chemical Technology (Jiangsu) Co., Ltd.

Loctite Bondace P-7-2: a UV type primer, commercially available from Henkel Company.

Borchigel L75N: a thickener, commercially available from OMG Corporation.

EVA: ethylene-vinyl acetate copolymer, commercially available from Dongguan Chuangsheng Footwear Co. Ltd.

### Preparation of the aqueous coating composition

According to the components and contents listed in Examples and Comparative Examples of Table 1, the aqueous polyurethane dispersion and the aqueous polyacrylate dispersion were mixed and stirred at a stirring speed of 300-500 rpm for 10 minutes, then Borchigel L75N was added and stirred at a stirring speed of 800-1000 rpm for 15-20 minutes, and the mixture was filtered through a 200 mesh filter cloth to give each of the aqueous coating compositions of Examples and Comparative Examples.

### Preparation of the substrate EVA

The commercially available EVA was cut into a size of 2 cm wide and 12 cm long. The EVA surface was cleaned with a fiber cloth containing MEK to remove stains such as oil stains, and the cleaned EVA surface was exposed to a fuming cupboard until the cleaned surface was dry. Then the EVA surface was coated by using a fiber cloth containing Loctite Bondace P-7-2, dried in an oven at 60°C for 3 minutes, taken out from the oven, and treated by irradiation under the ultraviolet, wherein the irradiation light source was a mercury lamp, the irradiation energy was 600-1000 mJ/cm², and the irradiation time was 5-30 seconds. After the irradiation treatment, it was placed at room temperature for later use.

### Preparation of the coating layer

The peelable aqueous coating composition shown in Table 1 was applied with a fine brush to the surface of the EVA substrate as treated above, and the coating amount of the wet film was 100 g/m² - 300 g/m². The wet film was put in an oven at 60°C for 3-5 minutes until the moisture has completely evaporated, and then the film was placed at room temperature for 20 minutes, and the performance of the coating layer formed from the peelable aqueous coating composition was tested.

### Test for the peelability of the coating layer

The peelability of the coating layer was judged by manual peeling, and the judging process could be referred to Figure 1. When the coating layer could be peeled off from the surface of the substrate and the coating layer was intact, the peelability of the coating layer was qualified; otherwise, it was unqualified.

The components and the constitutions of the aqueous coating compositions of Examples and Comparative Examples, and the evaluation results of the peelability of the coating layers formed from the compositions were listed in Table 1.

**Table 1: Aqueous coating compositions and the performance evaluation results thereof**

| | Constitutions of the aqueous coating compositions | | | | |
|---|---|---|---|---|---|
| | Aqueous polyurethane dispersion | | Aqueous polyacrylate dispersion | | Evaluation for the peelability of the coating layer |
| Example 1 | Impranil DLP | 35g | Bayhydrol A 2457 | 65g | The coating layer could be peeled off from the surface of the substrate and the coating layer was intact |
| Example 2 | Impranil DLP | 25g | Bayhydrol A 2457 | 75g | The coating layer could be peeled off from the surface of the substrate and the coating layer was intact |
| Example 3 | Impranil DLU | 40g | Bayhydrol A 2457 | 60g | The coating layer could be peeled off from the surface of the substrate and the coating layer was intact |
| Example 4 | Impranil DLU | 35g | Bayhydrol A 2457 | 65g | The coating layer could be peeled off from the surface of the substrate and the coating layer was intact |
| Example 5 | Impranil DLU | 30g | Bayhydrol A 2457 | 70g | The coating layer could be peeled off from the surface of the substrate and the coating layer was intact |
| Example 6 | Impranil DLU | 25g | Bayhydrol A 2457 | 75g | The coating layer could be peeled off from the surface of the substrate and the coating layer was intact |
| Example 7 | Impranil DLU | 20g | Bayhydrol A 2457 | 80g | The coating layer could be peeled off from the surface of the substrate and the coating layer was intact |
| Example 8 | Impranil DLV/1 | 35g | Bayhydrol A 2457 | 65g | The coating layer could be peeled off from the surface of the substrate and the coating layer was intact |
| Example 9 | Impranil DLV/1 | 25g | Bayhydrol A 2457 | 75g | The coating layer could be peeled off from the surface of the substrate and the coating layer was intact |
| Example 10 | Impranil DLU | 40g | Bayhydrol A 242 | 60g | The coating layer could be peeled off from the surface of the substrate and the coating layer was intact |
| Example 11 | Impranil DLU | 30g | Bayhydrol A 242 | 70g | The coating layer could be peeled off from the surface of the substrate and the coating layer was intact |
| Example 12 | Impranil DLU | 20g | Bayhydrol A 242 | 80g | The coating layer could be peeled off from the surface of the substrate and the coating layer was intact |
| Example 13 | Impranil DL 1069 | 35g | Bayhydrol A 2546 | 65g | The coating layer could be peeled off from the surface of the substrate and the coating layer was intact |
| Example 14 | Impranil DLU | 35g | Bayhydrol A 2546 | 65g | The coating layer could be peeled off from the surface of the substrate and the coating layer was intact |
| Comparative Example 1 | Dispercoll U56 | 35g | Bayhydrol A 2457 | 65g | The coating layer was hardly peeled off from the substrate, and a large amount of the coating layer which could not be peeled off was remained on the surface of the substrate |
| Comparative Example 2 | Dispercoll U 2682 | 35g | Bayhydrol A 2457 | 65g | The coating layer was hardly peeled off from the substrate, and a large amount of the coating layer which could not be peeled off was remained on the surface of the substrate |
| Comparative Example 3 | Dispercoll U 8755 | 35g | Bayhydrol A 2457 | 65g | The coating layer could be peeled off from the surface of the substrate, but the breakage of the coating layer occurred |
| Comparative Example 4 | Impranil DLU | 50g | Bayhydrol A 2457 | 50g | The coating layer could be peeled off from the surface of the substrate, but the breakage of the coating layer occurred |
| Comparative Example 5 | Impranil DLU | 10g | Bayhydrol A 2457 | 90g | The coating layer could be peeled off from the surface of the substrate, but the breakage of the coating layer occurred |
| Comparative Example 6 | Impranil DLC-F | 35g | Bayhydrol A 2457 | 65g | The coating layer could be peeled off from the surface of the substrate, but the breakage of the coating layer occurred |
| Comparative Example 7 | Impranil DLC-T | 35g | Bayhydrol A 2457 | 65g | The coating layer could be peeled off from the surface of the substrate, but the breakage of the coating layer occurred |
| Comparative Example 8 | Impranil DAH | 35g | Bayhydrol A 2457 | 65g | The coating layer could be peeled off from the surface of the substrate, but the breakage of the coating layer occurred |
| Comparative Example 9 | Dispercoll U XP 2643 | 35g | Bayhydrol A 2457 | 65g | The coating layer could be peeled off from the surface of the substrate, but the breakage of the coating layer occurred |
| Comparative Example 10 | Impranil DLU | 60g | Bayhydrol A 2846 | 40g | The coating layer was hardly peeled off from the substrate, and a large amount of the coating layer which could not be peeled off was remained on the surface of the substrate |
| Comparative Example 11 | Impranil DLU | 70g | Bayhydrol A 2846 | 30g | The coating layer was hardly peeled off from the substrate, and a large amount of the coating layer which could not be peeled off was remained on the surface of the substrate |
| Comparative Example 12 | Impranil DLU | 80g | Bayhydrol A 2846 | 20g | The coating layer was hardly peeled off from the substrate, and a large amount of the coating layer which could not be peeled off was remained on the surface of the substrate |
| Comparative Example 13 | Impranil DLU | 90g | Bayhydrol A 2846 | 10g | The coating layer was hardly peeled off from the substrate, and a large amount of the coating layer which could not be peeled off was remained on the surface of the substrate |
| Comparative Example 14 | Impranil DLU | 35g | Bayhydrol AH 2892 | 65g | The coating layer was hardly peeled off from the substrate, and a large amount of the coating layer which could not be peeled off was remained on the surface of the substrate |
| Comparative Example 15 | Impranil DLU | 45g | Bayhydrol AH 2892 | 55g | The coating layer was hardly peeled off from the substrate, and a large amount of the coating layer which could not be peeled off was remained on the surface of the substrate |

The coating layers formed from the aqueous coating compositions of Examples 1-14 could be easily peeled off from the surface of the substrate and the coating layers were intact.

The aqueous polyurethane dispersions contained in the aqueous coating compositions of Comparative Examples 1-3 were of the crystallization type and had the melting enthalpy of greater than 3 J/g, the coating layers formed from the aqueous coating compositions could be peeled off from the surface of the substrate, but the breakage of the coating layers occurred, and even the coating layers were hardly peeled off from the substrates, and a large amount of the coating layers which could not be peeled off was remained on the surfaces of the substrates.

The weight ratio of the aqueous polyurethane dispersion to the aqueous polyacrylate dispersion of the aqueous coating composition of Comparative Example 4 was 1:1, the weight ratio of the aqueous polyurethane dispersion to the aqueous polyacrylate dispersion of the aqueous coating composition of Comparative Example 5 was 1:9, the coating layers formed from the aqueous coating compositions could be peeled off from the surfaces of the substrates, but the breakage of the coating layers occurred.

The aqueous polyurethane dispersions contained in the aqueous coating compositions of Comparative Example 6 and 7 had the tensile strength of 50 MPa and 6MP respectively, and the coating layers formed from the aqueous coating compositions could be peeled off from the surface of the substrate, but the breakage of the coating layers occurred.

The aqueous polyurethane dispersions contained in the aqueous coating compositions of Comparative Examples 8 and 9 were of aromatic type, and the coating layers formed therefrom could be peeled off from the surfaces of the substrates, but the breakage of the coating layers occurred.

The weight ratios of the aqueous polyurethane dispersions to the aqueous polyacrylate dispersions of the aqueous coating compositions of Comparative Examples 10-13 were 3:2, 7:3, 4:1 and 9:1 respectively, and the coating layers formed from the aqueous coating compositions were hardly peeled off from the substrates, and a large amount of the coating layers which could not be peeled off were remained on the surfaces of the substrates.

The aqueous polyacrylate dispersion of the aqueous coating compositions of Comparative Examples 14-15 had a minimum film formation temperature(MFFT) of 60°C and the hydroxy content of 0 wt%, and the coating layers formed therefrom were hardly peeled off from the substrates, and a large amount of the coating layers which could not be peeled off were remained on the surfaces of the substrates.

It will be evident to those skilled in the art that the invention is not limited to the details set forth, and that the present invention may be embodied in other specific forms without departing from the spirit or essential characteristics thereof. The present embodiments are therefore to be considered in all respects as illustrative and not limiting, and thereby the scope of the present invention is indicated by the appended claims rather than by the foregoing description; and moreover any changes, as long as it falls within the meaning and range of the equivalence to the claims, should be considered as a part of the present invention.

## Claims

1. An aqueous coating composition, comprising:
A. at least one aliphatic and/or alicyclic aqueous polyurethane dispersion, the polyurethane contained therein has a melting enthalpy of less than 3 J/g at 20°C to 100°C, based on the first heating-curve measured by DSC according to DIN65467; said aqueous polyurethane dispersion has a tensile strength of 10 MPa - 45 MPa; and
B. at least one aqueous polyacrylate dispersion, which has a minimum film formation temperature(MFFT) of less than 60°C, and the hydroxy content of 2.0 wt% - 6.0 wt%, relative to the total weight of said aqueous polyacrylate dispersion;
the weight ratio of said aqueous polyurethane dispersion to said aqueous polyacrylate dispersion is 1:4-9:10.

2. The composition according to claim 1, which is **characterized in that** the weight ratio of said aqueous polyurethane dispersion to said aqueous polyacrylate dispersion is 1:4 - 4:5, most preferably 1:4 - 2:3.

3. The composition according to claim 1 or 2, which is **characterized in that** said aqueous polyurethane dispersion has a tensile strength of 10 MPa - 30 MPa, the tensile strength is measured by DIN 53504.

4. The composition according to any of claims 1-3, which is **characterized in that** said aqueous polyurethane dispersion has the 100% module of 0.9 MPa - 5.0 MPa, most preferably 0.9 MPa - 2.0 MPa, the 100% module is measured by DIN 53504.

5. The composition according to any of claims 1-4, which is **characterized in that** the amount of said aqueous polyurethane dispersion is 20 wt% - 40 wt%, relative to the total weight of the composition.

6. The composition according to any of claims 1-5, which is **characterized in that** said aqueous polyacrylate dispersion has a minimum film formation temperature(MFFT) of less than 40°C, most preferably less than 30°C, the minimum film formation temperature(MFFT) is measured by DIN ISO 2115.

7. The composition according to any of claims 1-6, which is **characterized in that** said aqueous polyacrylate dispersion has the hydroxy content of 2.0 wt% - 5.0 wt%, most preferably 2.7 wt% - 4.8 wt%, relative to the total weight of said aqueous polyacrylate dispersion.

8. The composition according to any of claims 1-7, which is **characterized in that** the amount of said aqueous polyacrylate dispersion is 60 wt% - 80 wt%, relative to the total weight of the composition.

9. The composition according to any of claims 1-8, which is **characterized in that** said aqueous polyacrylate dispersion is a primary dispersion.

10. A process for preparing the composition according to any one of claims 1-9, comprising the following steps: mixing said aqueous polyurethane dispersion and said aqueous polyacrylate dispersion in any manner.

11. An article comprising a substrate and a coating layer formed by applying the composition according to any of claims 1-9 to said substrate.

12. A multilayer coating layer, comprising a first coating layer and a second coating layer, said second coating layer is located on the first coating layer, said second coating layer is formed by applying the composition according to any of claims 1-9 to said first coating layer, then curing and drying.

13. The multilayer coating layer according to claim 12, which is **characterized in that** said second coating is selectively peelable when not needed.

14. The multilayer coating layer according to claim 12 or 13, which is **characterized in that** the adhesive force between the first coating layer and the substrate is greater than the adhesive force between the second coating layer and the first coating layer.

15. A process for treating a substrate having a primer coating, comprising:
I. Applying a primer to a substrate, then curing and drying to form a primer coating;
II. Applying an adhesive to a part of the surface of said primer coating, then curing and drying to form an adhesive layer, and applying the aqueous coating composition according to any of claims 1-9 to the surface of the primer coating where the adhesive is not applied, then curing and drying to form a peelable coating layer; and
III. Contacting the surface containing the adhesive layer with the surface of the substrate itself or an additional base and adhering, optionally removing the peelable coating layer and optionally decorating the surface of the primer coating.

16. The method according to claim 15, which is **characterized in that** the primer is UV-type, and further preferably contains a carbon-carbon double bond structure, and most preferably is one or more of the following: a polyurethane dissolved in a polar solvent, a polyacrylic acid dissolved in a polar solvent and an acrylic monomer dissolved in a polar solvent.
